Europäisches Patentamt

(19) **European Patent Office**

Office européen des brevets

(11) Publication number: **0 187 419**
**B1**

(12) EUROPEAN PATENT SPECIFICATION

(45) Date of publication of the patent specification:
28.03.90

(51) Int. Cl.⁴: **G01N 27/06**, G01N 27/07

(21) Application number: 85202090.8

(22) Date of filing: **17.12.85**

(54) **Device for detecting air gaps in liquid product pieces.**

(30) Priority: **07.01.85 GB 8500352**

(43) Date of publication of application:
**16.07.86 Bulletin 86/29**

(45) Publication of the grant of the patent:
**28.03.90 Bulletin 90/13**

(84) Designated Contracting States:
**AT BE CH DE FR GB IT LI NL SE**

(56) References cited:
**EP-A- 0 115 106**
**CA-A- 1 191 228**
**DE-A- 1 598 652**
**DE-A- 2 027 947**
**DE-A- 2 536 821**
**GB-A- 1 438 282**
**US-A- 3 939 401**

**PATENT ABSTRACTS OF JAPAN, vol. 8,**
**no. 286 (P-324)[1723], 27th December 1984; & JP - A**
**- 59 148 822 (SUMITOMO DENKI KOGYO**
**K.K.) 25-08-1984**

(73) Proprietor: **UNILEVER NV, Burgemeester**
**s'Jacobplein 1 P.O. Box 760, NL-3000 DK Rotterdam(NL)**

(84) Designated Contracting States: **BE CH DE FR IT LI NL SE**
**AT**

(73) Proprietor: **UNILEVER PLC, Unilever House Blackfriars**
**P.O. Box 68, London EC4P 4BQ(GB)**

(84) Designated Contracting States: **GB**

(72) Inventor: **der Kinderen, Wilhelmus Klaas, Zorggras 3,**
**NL-3648 HT Wilnis(NL)**

(74) Representative: **van Gent, Jan Paulus et al, Unilever N.V.**
**Patent Division P.O. Box 137, NL-3130 AC**
**Vlaardingen(NL)**

## Description

The present invention relates to a device for detecting air gaps in liquid product lines. In particular, the invention relates to such device for use as a low product level detector in systems where liquid products are pumped from product containers.

In many areas of trade it is custom to deliver liquid products such as liquid chemicals, in storage containers or drums from which these products are subsequently pumped to the actual site of use.

In general the liquid product is transported from the container or reservoir to the site of application through a system of liquid lines by way of pumps. An insert positioned in and through the mouth of the container is connected to the liquid line leading to the pumping system, the lower end of the insert extending to close to the bottom of the container, the upper end being connected to the liquid line. An insert normally comprises a rigid shaft serving as or housing a suction tube. In conventional systems the insert often comprises an additional shaft housing a low product level detector such as a float switch, which stops the pumping action when the container is nearly empty.

Such additional shaft for housing a float switch is inconvenient from a manufacturing point of view and may constitute a serious restriction to the freedom of design of the insert. Also, the performance and reliability of conventional float switches are not optimal when rather viscous liquid products are used.

It is therefore an object of the present invention to provide a device capable of detecting an air gap in the flow of liquid in liquid product lines, and which can be optionally integrally incorporated in the liquid line itself.

It is a further object to provide such device having a very simple construction which can also reliably be used when handling viscous liquid products.

The device for detecting air gaps in liquid product lines according to the present invention comprises a closed chamber having an inlet for the introduction of liquid and an outlet for the discharge of liquid, and a sensing device for the detection of liquid in said chamber, the arrangement of the mouth ends of the inlet and outlet being such that an air trap cavity is defined above the maximum liquid level in the chamber, the sensing device being situated in said cavity and the sensing parts thereof extending below said maximum liquid level.

The arrangement of the inlet and outlet is preferably such that the inlet enters the chamber near or in the bottom wall of the chamber and the outlet near or in the top wall, the outlet extending for some distance downwardly in the chamber.

The sensing device must be capable of detecting the presence or absence of liquid below the maximum level thereof which is determined by the position of the mouth end of the outlet. Any suitable type of sensing device may be used such as a float switch or a conductivity or electrical resistance meter measuring the conductivity or electrical resistance of the medium. Such sensing devices are known e.g. from DE-A 2 027 947, DE-A 2 536 821 and EP-A 0 115 106.

For a reliable performance, even when viscous liquid products are used, the sensing device is situated in the sensing parts of the device extending to below the maximum level of liquid.

The invention will now be further illustrated with reference to the accompanying drawings in which:

- Figure 1 is a vertical cross-sectional view of a preferred embodiment of the present invention; and
- Figure 2 is a vertical cross-sectional view of a second preferred embodiment of the present invention.

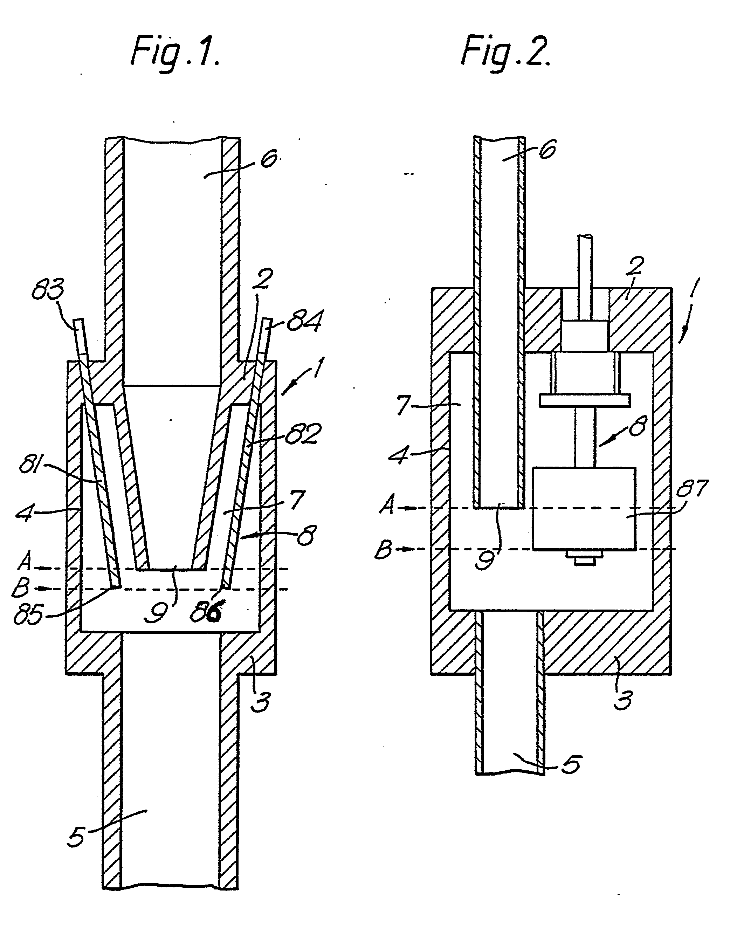

Referring now to Figures 1 and 2 in which like numbers indicate like parts, there is shown a chamber 1 having a top wall 2, a bottom wall 3 and a side wall or side walls 4. In general the external shape of chamber 1 will be a vertical cylinder, but different shapes may be equally suitable. Chamber 1 is closed apart from a tubular inlet 5 and a tubular outlet 6 (both drawn cut-off). Liquid product lines (not shown) are attached to or integral with inlet 5 and outlet 6. Outlet 6 extends downwardly in chamber 1 leaving an annular cavity 7. Cavity 7 houses a sensing device 8, which in the first embodiment (Figure 1) comprises two electrode pins 81 and 82, the upper ends whereof are electrically connected to suitable means for conductivity or electrical resistance measurement (the details of which are not shown as they are not essential to the invention), the lower ends 85 and 86 whereof extend to below the mouth end 9 of outlet 6. In the second embodiment (Figure 2) sensing device 8 comprises a conventional float switch, the details of which are not essential to the invention. In its lower position a floating body 87 extends to below mouth end 9 of outlet 6.

During operation a flow of liquid product will enter chamber 1 through inlet 5 and leave chamber 1 through outlet 6, the chamber being filled with liquid product to a maximum level of liquid (indicated by arrow A) as determined by the position of mouth end 9 of outlet 6. In the first embodiment (Figure 1) the lower ends 85 and 86 of the electrode pins 81 and 82 are immersed in liquid product so that the sensing device measures the conductivity or electrical resistance corresponding to the presence of liquid product. In the second embodiment floating body 87 is pushed up in its upper position indicating the presence of liquid product up to the maximum level (arrow A). Cavity 7 remains free from liquid product and functions as an air trap.

If the flow of liquid is interrupted as may be due to the liquid product level in the product container being too low or to a leakage which introduces air into the liquid line, a drop of the liquid level in chamber 1 will result. If such level drops to below a minimum level (indicated by arrow B), the lower ends 85 and 86 of the electrode pins 81 and 82 will no longer be immersed in liquid, whereas in the case of the second embodiment the floating body 87 will drop to its lower position. Accordingly the sensing device 8 will detect the absence of liquid product upon which detection suitable measures may be taken by an operator or system controlling unit.

Due to the fact that the sensing device 8 is situated in the air trap cavity 7 and only the lower part of the sensing device extends to below the maximum level of liquid in chamber 1, there is no possibility of unreliable or spurious signalling of the electrodes due to a remaining liquid bridge after drop of the liquid level, nor in the second embodiment there is a possibility that the floating body 87 remains stuck in its upper position due to clogging or sticking which might occur with rather viscous liquid products.

It will be clear that the sensitivity of the device in detecting air gaps is influenced by the internal diameter of the chamber, i.e. the smaller the diameter of the chamber, the smaller the air gaps that result in a detectable drop of the level of the liquid product in the chamber. Accordingly, the chamber dimensions are determined by manufacturing convenience and the sensitivity that is desired.

## Claims

1. Device for detecting air gaps in liquid product lines comprising a closed chamber (1) having an inlet (5) for the introduction of liquid and an outlet (6) for the discharge of liquid, and a sensing device (8) for the detection of liquid in said chamber (1), the arrangement of the mouth ends of the inlet (5) and outlet (6) being such that an air trap cavity (7) is defined above the maximum liquid level (A) in the chamber (1), the sensing device (8) being situated in said cavity (7) and the sensing parts (85, 86, 87) thereof extending below said maximum liquid level (A).

2. Device according to Claim 1, wherein the arrangement is such that the inlet (5) enters the chamber (1) near or in the bottom wall (7) and the outlet (6) near or in the top wall (2), the outlet (6) extending for some distance downwards in the chamber (1).

3. Device according to Claim 1 or 2, wherein the sensing device (8) comprises a float switch.

4. Device according to Claim 1 or 2, wherein the sensing device (8) comprises a conductivity meter (81, 82).

## Patentansprüche

1. Gerät zur Erfassung von Luftlücken in Flüssigkeitsleitungen, umfassend eine geschlossene Kammer (1) mit einem Einlaß (5) zum Einführen von Flüssigkeit und einem Auslaß (6) zum Abfließen von Flüssigkeit und eine Abtasteinrichtung (8) zur Erfassung von Flüssigkeit in dieser Kammer (1), wobei die Anordnung der Öffnungsenden des Einlasses (5) und Auslasses (6) so ist, daß ein Lufteinschluß-Hohlraum (7) über dem Maximal-Flüssigkeitsstand (A) in der Kammer (1) definiert ist, wobei die Abtasteinrichtung (8) in diesem Hohlraum (7) liegt und deren Abtastteile (85, 86, 87) unter diesen Maximal-Flüssigkeitsstand (A) reichen.

2. Gerät nach Anspruch 1, worin die Anordnung so ist, daß der Einlaß (5) nahe bei oder in der Unterseite (7) in die Kammer (1) eintritt und der Auslaß (6) nahe bei oder in der Oberseite (2), wobei der Auslaß (6) etwas in die Kammer (1) herabreicht.

3. Gerät nach Anspruch 1 oder 2, worin die Abtasteinrichtung (8) einen Schwimmerschalter umfaßt.

4. Gerät nach Anspruch 1 oder 2, worin die Abtasteinrichtung (8) einen Leitfähigkeitsmesser (81, 82) umfaßt.

## Revendications

1. Dispositif pour détecter des passages d'air dans des conduites de produit liquide, comportant une chambre fermée (1) présentant une entrée (5) pour l'introduction du liquide et une sortie (6) pour l'évacuation du liquide, ainsi qu'un dispositif de détection (8) pour détecter le liquide dans ladite chambre (1), la dispositif des extrémités d'embouchure de l'entrée (5) et de la sortie (6) étant telle qu'une cavité (7) formant piège à air est définie au-dessus du niveau maximal (A) du liquide dans la chambre (1), le dispositif de détection (8) étant disposé dans ladite cavité (7) et ses parties détectrices (85, 86, 87) s'étendant sous ledit niveau maximal (A) du liquide.

2. Dispositif selon la revendication 1, dans lequel la disposition est telle que l'entrée (5) pénètre dans la chambre (1) près de la paroi inférieure (3) ou dans cette paroi, et que la sortie (6) y pénètre de la paroi supérieure (2) ou dans cette paroi, la sortie (6) s'étendant sur une certaine distance vers le bas dans la chambre (1).

3. Dispositif selon la revendication 1 ou 2, dans lequel le dispositif de détection (8) est constitué par un interrupteur à flotteur (87).

4. Dispositif selon la revendication 1 ou 2, dans lequel le dispositif de détection (8) est constitué par un dispositif de mesure de la conductivité (81, 82).

EP 0 187 419 B1

Fig.1.

Fig.2.